# EUROPEAN PATENT SPECIFICATION

(11) **EP 2 504 650 B1**
(45) Date of publication and mention of the grant of the patent: **22.10.2014**
(21) Application number: 10787162.6
(22) Date of filing: 23.11.2010
(51) Int. Cl.: F28D 1/03, F28D 9/00, F28D 21/00, F24D 3/18, F24D 11/02, F24D 17/00

(54) **AN IMPROVED HEAT RECOVERY SYSTEM**
VERBESSERTES WÄRMERÜCKGEWINNUNGSSYSTEM
SYSTÈME DE RÉCUPÉRATION DE CHALEUR AMÉLIORÉ

(30) Priority: 24.11.2009 GB 0920557
(43) Date of publication of application: 03.10.2012
(73) Proprietor: NLSD Associates Limited, Barrowford, Lancashire BB9 8PH (GB)
(72) Inventor: BRACEWELL, Neil, Barrowford Lancashire BB9 8PH (GB)
(74) Representative: Waddington, Richard
(86) International application number: PCT/GB2010/051945
(87) International publication number: WO 2011/064570

(56) References cited:
- EP-A2- 0 153 143
- CH-A5- 655 780

## Description

The invention relates to an improved heat recovery system. The invention further relates to an improved heat recovery device for use in the heat recovery system. EP-A2-0153143 discloses a heat recovery system according to the preamble of claim 1, wherein the refrigeration assembly is not disclosed.

Most buildings, whether they are for commercial or domestic use, need a supply of hot water. For example, the hot water may be needed for use in central heating systems, washing machines, or dishwashers. Commonly, a hot water tank is provided in a building to store water and heat it to temperatures in the region of 70°C. When a portion of the hot water is run off for use in an appliance, this water is replaced in the tank by cold water, often mains cold water, which is generally at around 10°C. The effect of adding cold water to the hot water tank is to cause an immediate reduction in the temperature of the water already present. To compensate, hot water tanks generally comprise a heat source which is triggered to heat the water. In normal use, the water may be reheated a number of times each day in order to maintain an elevated temperature. Consequently, the system consumes a large amount of heat energy. Thus, known systems are inefficient and expensive to operate.

Many kitchens, in particular, commercial kitchens, generate a large amount of heat energy during cooking. Often, this heat energy, or hot fluid flow, dissipates into the environment, or is directed away from the kitchen through an exhaust or dirty air outlet.

Related prior art CH 655 780 A5 discloses a heat recovery system comprising a heat recovery device, a fluid supply means being operable to supply a fluid at a first temperature to the fluid supply means; and a refrigeration assembly. Prior art EP 0 153 143 A2 discloses a heat exchange element which comprises two plates.

It is an object of the invention to provide a heat recovery system which is energy efficient and economical to operate. It is a further object of the invention to provide a heat recovery device for use in the heat recovery system.

According to the present invention there is provided an apparatus and method as set forth in the appended claims. Other features of the invention will be apparent from the dependent claims, and the description which follows.

According to an aspect of the present invention there is provided a heat recovery system comprising a heat recovery device having a plurality of heat recovery plates; a fluid supply means connectable to at least the heat recovery device; the heat recovery device being operable to supply a fluid at a first temperature to the fluid supply means; and a refrigeration assembly, the refrigeration assembly being operable to supply a fluid to the heat recovery device at a second temperature.

Preferably, the heat recovery plates are mounted substantially parallel to each other.

Preferably, the fluid is an exhaust airflow, preferably a hot exhaust gas. The fluid may be water.

Preferably, the heat recovery device is located in a dirty exhaust duct, preferably an exhaust duct from a kitchen, most preferably a commercial kitchen. The heat recovery device may be located in a flue of a boiler.

The heat recovery device operates substantially in the manner of a heat exchanger, by transferring heat through a conducting wall, i.e. said heat recovery plates, from one fluid to another.

Preferably, the heat recovery device comprises a fluid inlet and a fluid outlet. Preferably, fluid in the fluid outlet is at a temperature greater than fluid in the fluid inlet. Preferably, the refrigeration assembly is located between the fluid inlet and the fluid outlet.

Preferably, the refrigeration assembly is an inverter driven refrigeration assembly. Preferably, said assembly comprises a compressor, preferably an inverter compressor. Said compressor is operable to continuously operate and may speed up if the temperature is higher than needed or slow down if the temperature is too low.

Preferably, a refrigerant is circulated through the refrigeration assembly. Preferably, the refrigerant is a HFC refrigerant, most preferably R404a.

Unlike conventional compressors that start or stop repetitively, an inverter compressor provides finely tuned operation with reduced temperature variations. In so doing, the power consumption of an inverter compressor is lower than known standard compressors.

Preferably, the refrigeration assembly comprises at least one plate heat exchanger. Preferably, the or each plate heat exchanger is operable to exchange heat energy from the refrigerant to the fluid. Preferably, two plate heat exchangers are provided. Preferably, a first said exchanger is operable to cause heat exchange between the refrigeration assembly and the heat recovery device. Preferably, a second said exchanger is operable to cause heat exchange between the refrigeration assembly and a heat exchange system of a dwelling, preferably a hot fluid system of a dwelling. Preferably, the refrigeration assembly, preferably the second plate exchanger is operable to provide a substantially continuous supply of fluid at an elevated temperature to a dwelling.

Preferably, the exhaust air flowrate is between substantially 0.5 and 100m³/s, most preferably substantially between 2 and 10m³/s, most preferably 3m³/s. Preferably, the refrigerant flowrate is between substantially 0.1 and 1 kg/s, most preferably substantially 0.26 kg/s.

Preferably, the fluid is a liquid, preferably comprising a refrigerant and a liquid, most preferably glycol and water. The fluid may be a gas.

Preferably, the first temperature of the fluid is greater than the second temperature of the fluid.

Preferably, the fluid is re-circulated through the heat recovery device. Preferably, the refrigerant is re-circulated through the refrigeration assembly.

Preferably, the fluid supply means supplies fluid to a holding tank, preferably at a temperature greater than the mains cold water temperature. Preferably, the fluid in the tank is at a temperature of substantially between 50°C and 100°C, most preferably substantially at 70°C.

Preferably, the heat recovery system further comprises a buffer cylinder. Preferably, the buffer cylinder is located downstream of the heat recovery device. Preferably, the buffer cylinder is upstream of the tank. Preferably, the buffer cylinder is operable to store fluid from the heat recovery device. Preferably, the buffer cylinder is operable to supply fluid for use by a user or in an appliance. Preferably, the buffer cylinder is operable to supply fluid at an elevated temperature to the tank.

Preferably, at least one valve is provided in the heat recovery system. Said valve may be operable to release fluid from the tank. Said valve may be operable to release fluid from the buffer cylinder.

Preferably, communication means are provided being operable to communicate to the at least one valve to cause said valve to open or close.

Preferably, when an amount of fluid is released from the tank, the fluid supply means is operable to supply an equal amount of fluid to the tank. In this manner, the tank is kept at substantially a constant level. Further, because the fluid supplied to the tank is at an elevated temperature, the temperature of the fluid in the tank is substantially maintained. Preferably, the fluid is supplied from the buffer cylinder.

Preferably, a temperature measurement means is provided in the heat recovery system, preferably in the tank. Preferably, the temperature measurement means is operable to communicate with a heating system for the tank. Preferably, the heating system is operable to switch on/off, preferably depending on the temperature of the fluid in the tank.

Preferably, the heat recovery device is at a temperature greater than the temperature in the buffer cylinder.

in this manner, the heating system, for example, an immersion heater, is only switched on when the temperature of the fluid in the tank drops to a predetermined value. For example, the immersion heater will not be triggered to switch on until the fluid in the tank reaches 60°C.

Preferably, the tank is operable to supply fluid at an elevated temperature, preferably, to an appliance, preferably a dishwasher, or washing machine. The tank may supply said fluid to a central heating system. Advantageously, the water supply means provides water at a temperature greater than mains cold water to the tank. In so doing, the temperature of the fluid in the tank is maintained at an elevated temperature, preferably 70°C.

The system provides a means of maintaining the temperature of the tank water without having an additional heat source, for example, a heating coil or heat exchanger within the tank. Advantageously, the system can save approximately substantially between 2 and 100Kw and is therefore economical and efficient. Preferably, seven heat recovery plates are provided in the heat recovery device. Preferably, said plates are mounted perpendicular to a duct.

Preferably, at least one heat recovery plate comprises a wall of the duct.

Preferably, each said plate comprises a pair of plate members. Said members preferably being welded together. Most preferably, the members are welded together along a weld line which is located adjacent the periphery of at least one of said members. Preferably, the weld line is spaced substantially between 5mm and 15mm from said periphery, most preferably substantially 10mm.

Preferably, the members are alternatively or preferably additionally welded along a line which is located substantially centrally of said members. Preferably, the central weld line extends from one side of the members towards an opposite side. Preferably, the weld line extends substantially parallel to a top or bottom edge of the plates. Preferably, the members are welded at a plurality of points across the surface thereof. Preferably, the plurality of weld points are equi-distantly spaced apart, preferably being substantially between 35mm and 55mm apart, preferably substantially 45mm apart from each other. Preferably, the or each weld point is oval in cross section. Most preferably, each weld point is tear-drop shaped in cross section, preferably in plan view.

Advantageously, the plurality of welded points are laser welded.

The weld points ensure that fluid passing through the members is evenly dispersed. Further, it has been shown that a weld point having a tear-drop cross section is highly advantageous. Specifically, such a weld point eliminates "hot spots" on the recovery device. As a result, there is a surprising advantageous effect that a constant heat recovery results.

Preferably, the heat recovery plate comprises two members being laser welded along a periphery, and being welded at a plurality points on the surfaces thereof. Preferably, said members have substantially equal cross sectional area. The first member may be thicker than the second member. Preferably, the first and second member may be of equal thickness. Preferably, the first member comprises a lower layer and the second member comprises an upper layer of the plate.

Preferably, the heat recovery plate is substantially rectangular in plan view. Preferably, said plate is substantially between 100 and 500cm in length and substantially between 30cm and 100cm in width. Most preferably, said plate is substantially 200cm by 70cm in dimension. Preferably, the heat recovery plate comprises an inlet and preferably an outlet. Preferably, the inlet and/or the outlet are each substantially between 15 and 30mm in diameter. Preferably, the inlet diameter is substantially equal to the outlet diameter, preferably each diameter being substantially 22mm. Preferably, the inlet and outlet are spaced apart by preferably substantially between 20 and 70cm, preferably substantially 36cm.

Preferably, the heat recovery device, preferably each said plate, is manufactured from metals, preferably stainless steel.

The heat recovery device may be positioned adjacent a cooking appliance, preferably a cooker hood. The heat recovery device may be positioned in the canopy of a cooking appliance, preferably an industrial cooking appliance. The heat recovery device may form part of a splash-back to a cooking appliance.

All of the features described herein may be combined with any of the above aspects, in any combination.

An embodiment of the invention will now be described, by way of example only, with reference to the accompanying drawings, wherein:
Figure 1 shows a schematic perspective view of a heat recovery device according to the invention;
Figures 2a and 2b show a schematic side view and plan view respectively of a heat recovery device according to the invention;
Figure 3a and 3b show a schematic side view and plan view respectively of a heat recovery device according to the invention;
Figure 4 shows a schematic side sectional view of a heat recovery device according to the invention;
Figure 5 shows a schematic side sectional view of a heat recovery device according to the invention;
Figure 6 shows a schematic perspective view of a heat recovery device according to the invention;
Figures 7a, 7b and 7c show a schematic plan view, an exploded schematic plan view, and a schematic side view respectively of a heat recovery device according to the invention;
Figures 8a, 8b, 8c and 8d show a schematic plan view, an exploded schematic plan view, a schematic side view and a schematic side view respectively of a heat recovery device according to the invention;
Figure 9 shows a schematic layout of a heat recovery system according to the invention;
Figure 10 shows a schematic layout of an embodiment of a heat recovery system according to the invention; and
Figures 11a, 11b and 11c show a schematic perspective view of alternative embodiments of a heat recovery device according to the invention.

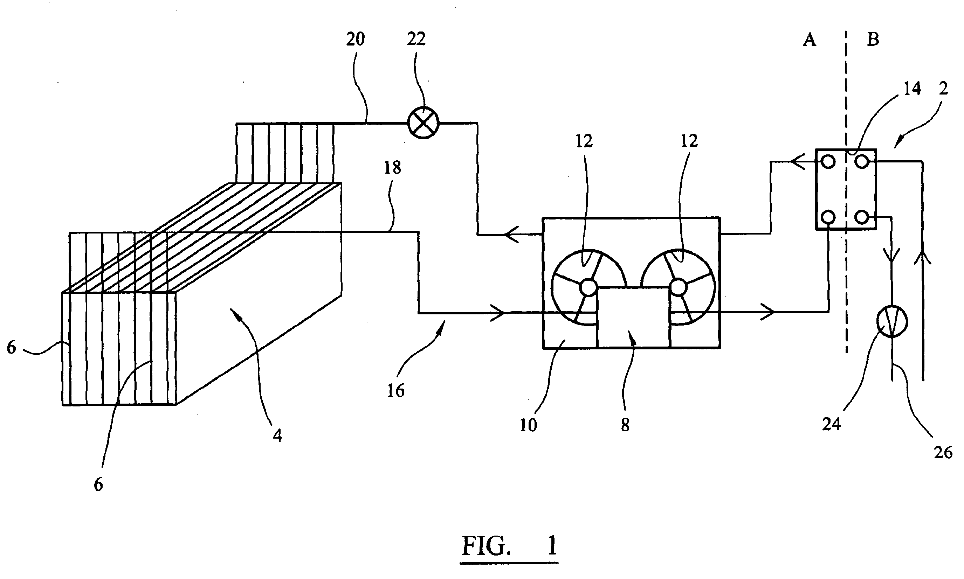

Figure 1 shows a part of a heat recovery system 2 according to the invention. The system 2 comprises a heat recovery device 4 comprising seven heat recovery plates 6, and a refrigeration assembly 8. The refrigeration assembly 8 comprises an inverter compressor 10, fans 12, and a heat exchanger plate 14. A dotted line is shown in the figure, dividing the heat exchanger plate 14 into section A and section B for ease of reference. Fluid supply means 16 are provided to connect the heat recovery device 4 and the refrigeration assembly 8. The fluid supply means 16 comprise an outlet 18 from the heat recovery device 4 and an inlet 20 to the heat recovery device 4. An expansion valve 22 is provided on the inlet 18. A low pressure hot water pump 24 is provided on a water outlet 26.

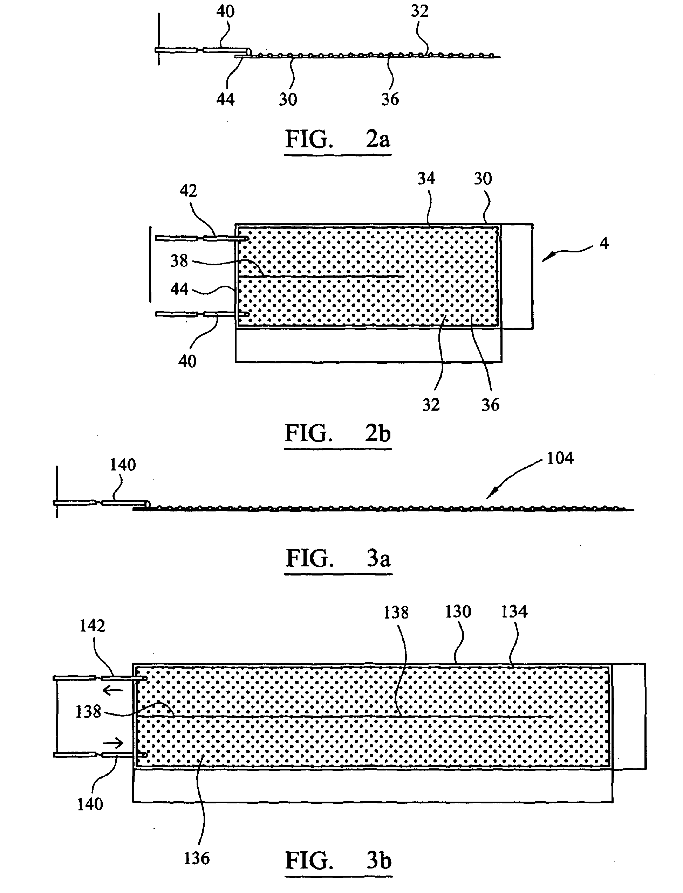

Figures 2a and 2b show the heat recovery plate 6 for use in the system 2. The heat recovery device 4 is generally rectangular in plan view and comprises a first member 30 and a second member 32. The first member 30 is arranged to be a lower layer or surface and the second member 32 is arranged to be an upper layer or surface. The second member 32 is thinner than the first member 30. It can be seen from Figure 2b that the members 30, 32 are welded together around a periphery 34. It has been found that laser welding is advantageous in comparison to spot welding techniques. This is because laser welding achieves stronger weld points, and a large volume of plates can be welded during the welding process, making the process quicker than spot welding. The welded points 36 are located across the members 30, 32, together with a central weld line 38. An inlet 40 and an outlet 42 are located on the members 30, 32 towards a first end 44. The welded points 36 will be discussed in further detail below. Figures 3a and 3b show an alternative embodiment of a heat recovery plate 104. The plate 104 is elongated in comparison to the device 4.

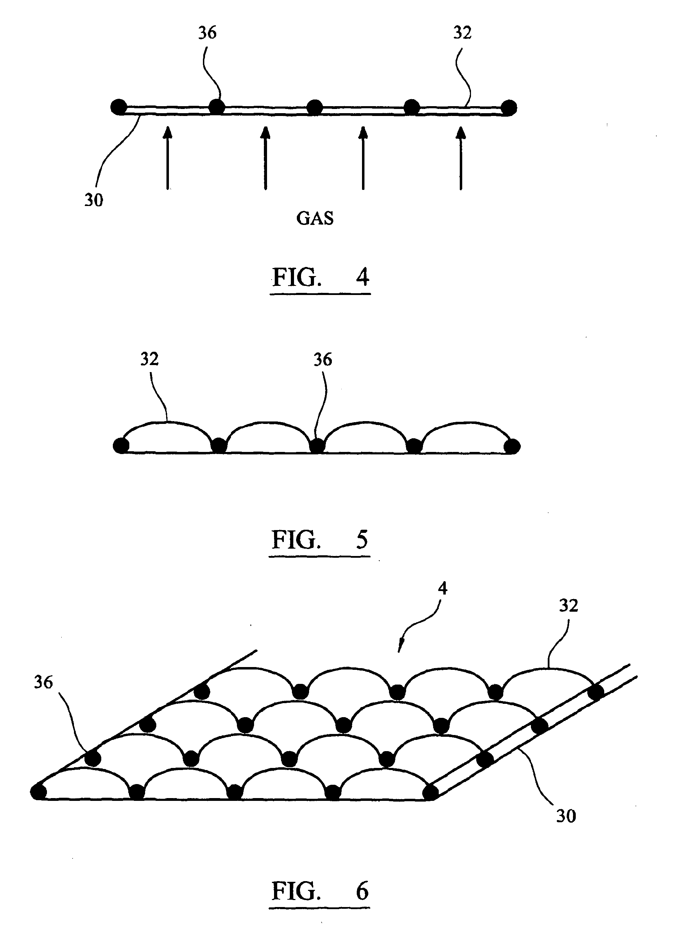

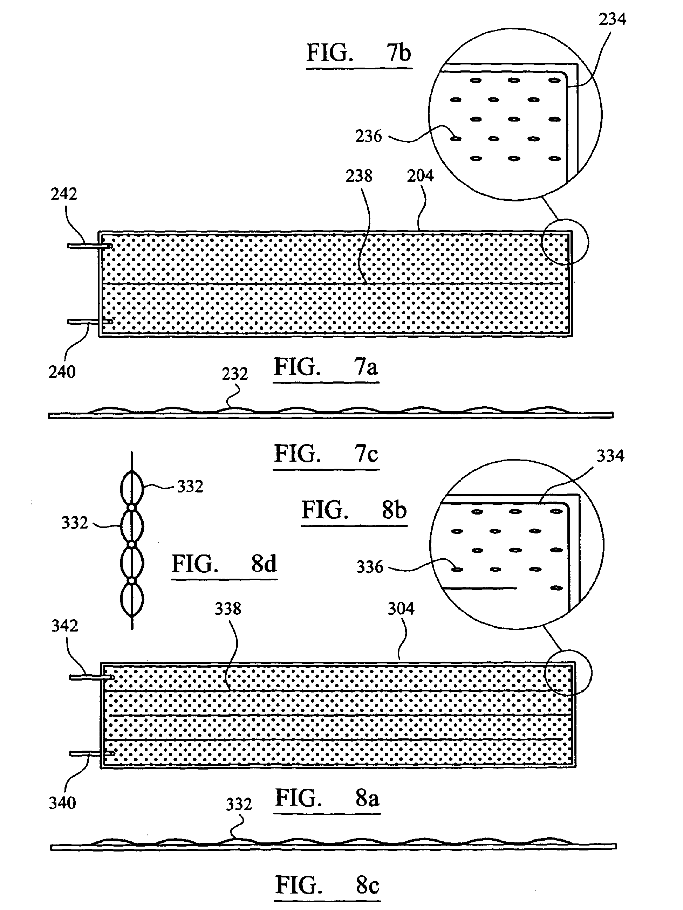

Figures 4, 5 and 6 show a sequence of steps for the manufacture of the plate 4, 104. in a first step, the two members 30, 32 are welded together around the periphery 34. The surface of the members 30, 32 is then laser welded at a plurality of point 36. Gas, preferably nitrogen, is then passed through the sandwiched members 30, 32 as shown in Figure 4. Due to the second member 32 being manufactured from thinner material than the first member 30, the second member 32 buckles or bubbles upwards by the force of the gas as shown in Figure 5. Figure 6 shows a perspective view of the resultant surface of the second member 32. In this arrangement, fluid entering the plate 4 is channelled over a large surface area due to the bubbled effect. Advantageously, this provides a maximum area for heat exchange to occur. Figures 7a and 7b show the heat recovery plate 204 in greater detail. In this embodiment, the weld line 238 extends to a point adjacent the periphery 234. The rise of each bubble in the second member 232 is approximately 3mm.

Figures 8a to 8c show an alternative embodiment of the heat recovery plate 304. In this embodiment, three laser welded lines 338 are provided on the members 330,332. Figure 8d shows a preferred arrangement of said members in which both sides of the heat recovery plate 304 is "bubbled" or raised. This is achieved by both members being of equal thickness such that when nitrogen is passed between them, inflation occurs on both sides which results in the increase in surface area.

In use, hot exhaust gas flows through the heat recovery device 4 as indicated by the arrow in Figure 1. Heat exchange occurs as the hot gas passes over the cooler plates 6. Fluid exits the device 4 via the outlet 18 and passes through the compressor 8 to the plate heat exchanger 14. On the side labelled "A", the fluid from the heat recovery device 4 circulates to allow heat exchange to occur across the exchanger 14. Fluid leaving the exchanger 14 is thus at a lower temperature and is directed to the compressor 8 to be cooled further. The cooler fluid then re-enters the heat recovery device 4 to begin heat exchange with the exhaust flow again. Side "B" of the figure shows heat transferred from the fluid flow into the exchanger 14 is directed to the dwelling flow to create a hot fluid flow for use in, for example, a water tank. Flow leaving the dwelling is then directed back to the exchanger 14 to begin heat exchange once again.

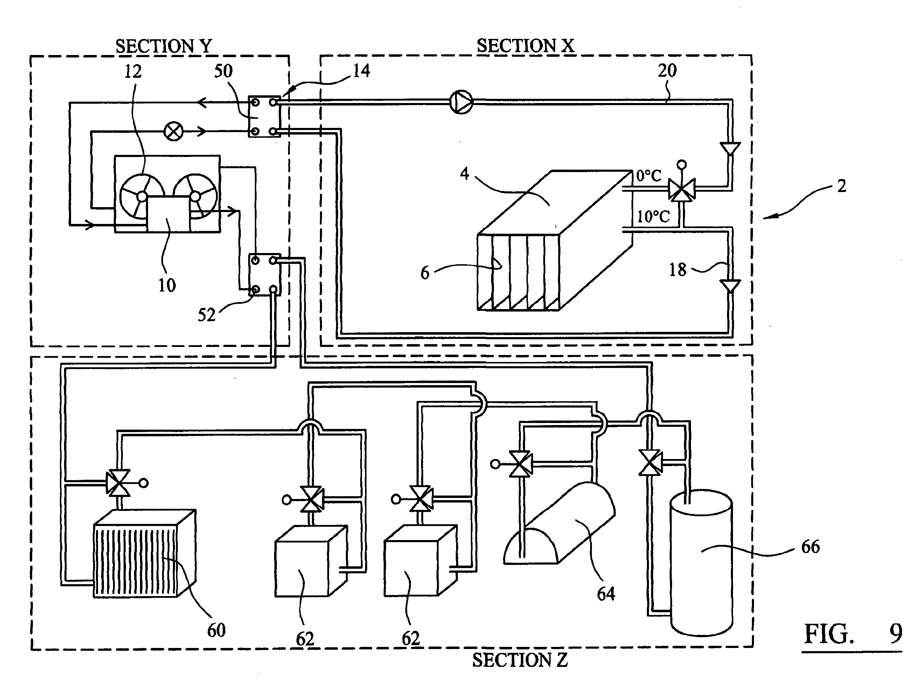

Figure 9 shows a schematic of the heat recovery system 2. For ease of understanding, the system 2 can be split into three sections, namely sections X, Y and Z as shown in the figure. The operation of the system 2 is as follows.

Section X comprises the heat recovery device 4. In use, hot fluid, particularly hot dirty air exhaust, flows into the heat recovery device 4 and over the plates 6. A refrigerant fluid, preferably a water/glycol mix of fluid, circulates through the plates 6 to provide a suitable environment for heat exchange to occur between the hot exhaust flow and the water/glycol mix. The refrigerant fluid exits the device 4 via outlet 18. The fluid is at an elevated temperature due to heat exchange. The fluid is directed to a first plate heat exchanger 50 of the refrigeration system 12. A refrigerant gas circulates through the refrigeration system 12, preferably R404a, and causes heat exchange to occur between the refrigerant liquid and refrigerant gas such that the refrigerant liquid temperature is decreased. The low temperature refrigerant liquid is directed back through the inlet 20 to the heat recovery device 4.

Section Y comprises the refrigeration system 12. Fluid at an increased temperature leaves plate heat exchanger 50 and is directed into the compressor 10 and towards plate heat exchanger 52. The fluid at elevated temperature leaves heat exchanger 52 to be directed to a hot water or heating system of a dwelling in section Z. Heat exchange occurs at the plate heat exchanger 52 such that fluid at a lower temperature is returned to the compressor 12 and to the plate heat exchanger 50 to take part in heat exchange for section X.

Section Z is the "hot" fluid section of the system 2. Section Z comprises a heater battery 60, fan coils 62, a door heater 64 and a hot water tank 66. Fluid exiting the plate heat exchanger 52 is at an elevated temperature and so can be supplied to, for example, the heater battery. The fluid in section Z is them directed back to the plate heat exchanger 52 to again allow for heat exchange to occur.

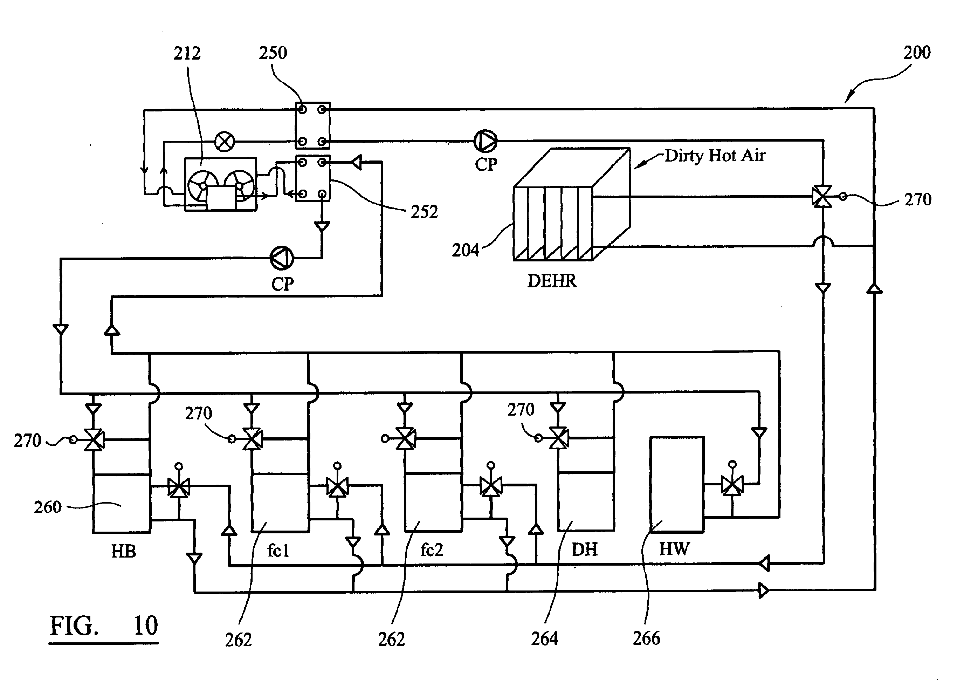

The system of the invention may also be used in "summer conditions" when a dwelling requires cooling for air conditioning. An example of such a system 200 is shown in Figure 10. it will be understood be the reader that like numerals to like parts to those used in Figure 9 are used. A plurality of three way valves 270 are incorporated into the system 200 to allow a user to direct a low temperature fluid flow to, for example, the fan coils 262. Further, the user can choose to direct the flow to promote heat exchange to provide hot water to the tank 266. The system allows for both cooling of the dwelling and also provides hot water to the dwelling.

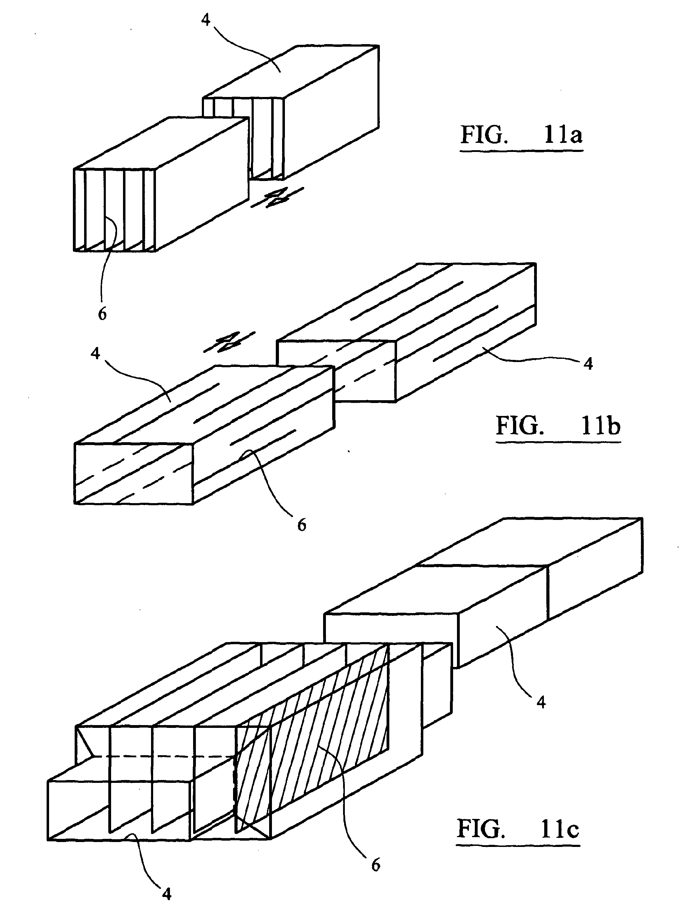

Figure 11a shows an embodiment of the heat recovery device 4. The heat recovery plates 6 may be sized according to the building application, being orientated vertically or horizontally as show in Figures 11a and 11b, or forming at least a section of the duct itself as shown in Figure 11c.

The system is particularly suitable for the recovery of waste heat from kitchen extract air in a commercial kitchen. A refrigerant is used to promote heat transfer. The refrigerant may be R22 but R404a is preferred. In test conditions, the waste air flow rate was 3m³/s and refrigerant flow rate 0.26 kg/s. The total recovered heat from the waste air to the refrigerant was predicted to be 23.8kW, of a total available heat 72.4kW, achieving a heat recovery performance of 33%, relative to ambient air temperature 10 deg-C. Furthermore, the heat exchanger performance as an evaporator achieved a refrigerant vapour quality of 63%.

The system may comprise a number of heat recovery devices, being installed within the extracted air stream. The number of heat recovery devices installed is based around the building heating requirements and the amount of wasted energy the dwelling discharges into the atmosphere. The evaporator (a number of plate heat exchangers) is sized in conjunction with a refrigeration system which delivers the optimum flow rate of refrigerant through the plates to absorb the waste heat energy. Due to the system lowering the surface plate temperature below the dew point, this causes condensation to form upon the surface of the plates. This in turn increases the heat transfer and also reduces the amount of grease forming on the surface of the plate. A conventional heat recovery system cannot be used due to grease clogging up the face of the coils which could potentially be a fire hazard and cause mechanical failure. The refrigeration system is designed and sized to operate around the evaporator and plate heat exchanger requirements. The compressor is inverter driven and controlled to optimise energy saving as the buildings heating and cooling demand is not fixed, therefore in the winter period the heating demand to the buildings is greater than in summer. Each refrigeration system and evaporator is designed to relate to the buildings heat loss, water heating and the buildings cooling requirements, but on some occasions full heat recovery is achieved and the surplus energy can be stored for further or future use. The refrigeration system has an air cooling condenser which is used when the plate heat exchanger requires assistance following a low heating demand to the building; meaning the refrigerant requires further heat loss to condense the gas to a liquid. Again these fans are speed controlled to optimize energy savings. The refrigeration system is used to cool the building in summer and in summer the buildings heating is not required but other items require heat (i.e. hot water requirements). The recovered heat from the cooling process will generate the buildings heating requirements during summer. In this period recovering the heat from the dirty extracted air may not be required as the buildings cooling load may generate sufficient heating. The refrigerant for the process is designed specifically to suit the buildings individual requirements. Selecting the refrigerant is based around the performance, efficiency and current regulations. When selecting the refrigerant and the equipment we look at the COP (coefficient of performance) as the system is an energy saving application the operating costs associated are very important. The plate heat exchanger is sized to optimise the heat transfer for the refrigerants heat rejection from the evaporator to the fluid flow and return network (Low pressure hot water). The LPHW system can be connected to a number of appliances, heating fan coils, over door heater, hot water cylinder etc. The water side of the plate heat exchanger can not only be sized for the refrigerant side but also the fluid side to suit appliances optimum flow rates.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A heat recovery system (2) comprising a heat recovery device (4) having a plurality of heat recovery plates (6); a fluid supply means connectable to at least the heat recovery device (16); the heat recovery device being operable to supply a fluid at a first temperature to the fluid supply means; and a refrigeration assembly (8),
**characterised by** the refrigeration assembly (8) being operable to supply a fluid to the heat recovery device (4) at a second temperature.

2. A heat recovery system (2) as claimed in claim 1, wherein the heat recovery plates (6) are mounted substantially parallel to each other.

3. A heat recovery system (2) as claimed in claim 1 or 2, wherein the fluid is a hot exhaust gas.

4. A heat recovery system (2) as claimed in any one of the preceding claims, wherein the heat recovery device (4) is located in an exhaust duct.

5. A heat recovery system as (2) claimed in any one of the preceding claims, wherein the heat recovery device (4) comprises a fluid inlet (20) and a fluid outlet (18).

6. A heat recovery system (2) as claimed in claim 5, wherein fluid in the fluid outlet (18) is at a temperature greater than fluid in the fluid inlet (20).

7. A heat recovery system (2) as claimed in claims 5 or 6, wherein a refrigeration assembly (8) is located between the fluid inlet (20) and the fluid outlet (18).

8. A heat recovery system (2) as claimed in claim 7, wherein the refrigeration assembly (8) is an inverter driven refrigeration assembly.

9. A heat recovery system (2) as claimed in claim 8, wherein said refrigeration assembly (8) comprises an inverter compressor (10).

10. A heat recovery system (2) as claimed in any one of claims 7 to 9, wherein a refrigerant is circulated through the refrigeration assembly (8).

11. A heat recovery system (2) as claimed in any one of claims 7 to 10, wherein the refrigeration assembly (8) comprises at least one plate heat exchanger (14).

12. A heat recovery system (2) as claimed in claim 11, wherein two plate heat exchangers (50,52) are provided, a first said exchanger (50) being operable to cause heat exchange between the refrigeration assembly (8) and the heat recovery device (4).

13. A heat recovery system (2) as claimed in claim 12, wherein a second plate heat exchanger (52) is operable to cause heat exchange between the refrigeration assembly (8) and a heat exchange system of a dwelling.

14. A heat recovery system (2) as claimed in any one of the preceding claims, wherein the exhaust air flowrate is between substantially 0.5 and 100m³/s.

15. A heat recovery system (2) as claimed in any one of the preceding claims, wherein the refrigerant flowrate is between substantially 0.1 and 1 kg/s.

## Patentansprüche

1. Wärmerückgewinnungssystem (2), umfassend eine Wärmerückgewinnungsvorrichtung (4) mit mehreren Wärmerückgewinnungsplatten (6); ein Fluidzufuhrmittel, das an wenigstens die Wärmerückgewinnungsvorrichtung (16) angeschlossen werden kann; wobei die Wärmerückgewinnungsvorrichtung dazu betriebsfähig ist, ein Fluid mit einer ersten Temperatur zu dem Fluidzufuhrmittel zu führen; und eine Kühlanordnung (8),
**dadurch gekennzeichnet, dass** die Kühlanordnung (8) dazu betriebsfähig ist, ein Fluid mit einer zweiten Temperatur zu der Wärmerückgewinnungsvorrichtung (4) zu führen.

2. Wärmerückgewinnungssystem (2) nach Anspruch 1, wobei die Wärmerückgewinnungsplatten (6) im Wesentlichen zueinander parallel angebracht sind.

3. Wärmerückgewinnungssystem (2) nach Anspruch 1 oder 2, wobei das Fluid ein heißes Abgas ist.

4. Wärmerückgewinnungssystem (2) nach einem der vorhergehenden Ansprüche, wobei sich die Wärmerückgewinnungsvorrichtung (4) in einer Abgasleitung befindet.

5. Wärmerückgewinnungssystem (2) nach einem der vorhergehenden Ansprüche, wobei die Wärmerückgewinnungsvorrichtung (4) einen Fluideinlass (20) und einen Fluidauslass (18) umfasst.

6. Wärmerückgewinnungssystem (2) nach Anspruch 5, wobei sich das Fluid in dem Fluidauslass (18) bei einer höheren Temperatur als das Fluid in dem Fluideinlass (20) befindet.

7. Wärmerückgewinnungssystem (2) nach Anspruch 5 oder 6, wobei sich eine Kühlanordnung (8) zwischen dem Fluideinlass (20) und dem Fluidauslass (18) befindet.

8. Wärmerückgewinnungssystem (2) nach Anspruch 7, wobei die Kühlanordnung (8) eine inverterbetriebene Kühlanordnung ist.

9. Wärmerückgewinnungssystem (2) nach Anspruch 8, wobei die Kühlanordnung (8) einen Inverterverdichter (10) umfasst.

10. Wärmerückgewinnungssystem (2) nach einem der Ansprüche 7 bis 9, wobei ein Kühlmittel durch die Kühlanordnung (8) umgewälzt wird.

11. Wärmerückgewinnungssystem (2) nach einem der Ansprüche 7 bis 10, wobei die Kühlanordnung (8) wenigstens einen Plattenwärmeaustauscher (14) umfasst.

12. Wärmerückgewinnungssystem (2) nach Anspruch 11, wobei zwei Plattenwärmeaustauscher (50, 52) bereitgestellt sind, wobei ein erster Wärmeaustauscher (50) dazu betriebsfähig ist, einen Wärmeaustausch zwischen der Kühlanordnung (8) und der Wärmerückgewinnungsvorrichtung (4) zu verursachen.

13. Wärmerückgewinnungssystem (2) nach Anspruch 12, wobei ein zweiter Plattenwärmeaustauscher (52) dazu betriebsfähig ist, einen Wärmeaustausch zwischen der Kühlanordnung (8) und einem Wärmeaustauschsystem einer Wohnstätte zu verursachen.

14. Wärmerückgewinnungssystem (2) nach einem der vorhergehenden Ansprüche, wobei die Abluftfließmenge zwischen im Wesentlichen 0,5 und 100 m³/s beträgt.

15. Wärmerückgewinnungssystem (2) nach einem der vorhergehenden Ansprüche, wobei die Kühlmittelfließmenge zwischen im Wesentlichen 0,1 und 1 kg/s beträgt.

## Revendications

1. Système de récupération de chaleur (2) comprenant un dispositif de récupération de chaleur (4) ayant une pluralité de plaques de récupération de chaleur (6) ; un moyen d'alimentation en fluide (16) pouvant être connecté au moins au dispositif de récupération de chaleur ; le dispositif de récupération de chaleur pouvant fonctionner pour fournir un fluide à une première température au moyen d'alimentation en fluide ; et un ensemble de réfrigération (8),
**caractérisé en ce que** l'ensemble de réfrigération (8) peut fonctionner pour fournir un fluide au dispositif de récupération de chaleur (4) à une deuxième température.

2. Système de récupération de chaleur (2) selon la revendication 1, dans lequel les plaques de récupération de chaleur (6) sont montées de manière sensiblement parallèle les unes aux autres.

3. Système de récupération de chaleur (2) selon la revendication 1 ou 2, dans lequel le fluide est un gaz d'échappement chaud.

4. Système de récupération de chaleur (2) selon l'une quelconque des revendications précédentes, dans lequel le dispositif de récupération de chaleur (4) est situé dans un tuyau d'échappement.

5. Système de récupération de chaleur (2) selon l'une quelconque des revendications précédentes, dans lequel le dispositif de récupération de chaleur (4) comprend une entrée de fluide (20) et une sortie de fluide (18).

6. Système de récupération de chaleur (2) selon la revendication 5, dans lequel le fluide dans la sortie de fluide (18) est à une température supérieure à celle du fluide dans l'entrée de fluide (20).

7. Système de récupération de chaleur (2) selon les revendications 5 ou 6, dans lequel un ensemble de réfrigération (8) est situé entre l'entrée de fluide (20) et la sortie de fluide (18).

8. Système de récupération de chaleur (2) selon la revendication 7, dans lequel l'ensemble de réfrigération (8) est un ensemble de réfrigération entraîné par un inverseur.

9. Système de récupération de chaleur (2) selon la revendication 8, dans lequel ledit ensemble de réfrigération (8) comprend un compresseur à inverseur (10).

10. Système de récupération de chaleur (2) selon l'une quelconque des revendications 7 à 9, dans lequel un réfrigérant circule à travers l'ensemble de réfrigération (8).

11. Système de récupération de chaleur (2) selon l'une quelconque des revendications 7 à 10, dans lequel l'ensemble de réfrigération (8) comprend au moins un échangeur de chaleur à plaques (14).

12. Système de récupération de chaleur (2) selon la revendication 11, dans lequel deux échangeurs de chaleur à plaques (50, 52) sont prévus, un premier desdits échangeurs (50) pouvant fonctionner de manière à causer un échange de chaleur entre l'ensemble de réfrigération (8) et le dispositif de récupération de chaleur (4).

13. Système de récupération de chaleur (2) selon la revendication 12, dans lequel un deuxième échangeur de chaleur à plaques (52) peut fonctionner de manière à causer un échange de chaleur entre l'ensemble de réfrigération (8) et le système d'échange de chaleur d'une habitation.

14. Système de récupération de chaleur (2) selon l'une quelconque des revendications précédentes, dans lequel le débit d'air d'échappement est compris entre sensiblement 0,5 et 100 m³ par seconde.

15. Système de récupération de chaleur (2) selon l'une quelconque des revendications précédentes, dans lequel le débit de réfrigérant est compris entre sensiblement 0,1 et 1 kg par seconde.
